# EUROPEAN PATENT APPLICATION

(11) **EP 1 353 471 A1**
(43) Date of publication of application: **15.10.2003**
(21) Application number: 03252038.9
(22) Date of filing: 31.03.2003
(51) Int. Cl.: H04L 12/18, H04L 29/06, H04L 12/56

(54) **Method and apparatus for multimedia transmission in UMTS networks**

(30) Priority: 10.04.2002 GB 0208272
(71) Applicant: Nokia Corporation, 02150 Espoo (FI)
(72) Inventor: Muhonen, Ahti, 04680 Hirvihaara (FI)
(74) Representative: Driver, Virginia Rozanne

(57) **Abstract**

A method of transmitting multimedia content from a network content element (30) to a network data distribution element (34) for further distribution within a mobile telecommunications network, the method including the steps of: (a) providing the multimedia content to the network content element (31); (b) sending the multimedia content from the content element (30) and receiving it in the data distribution element (34); (c) determining, in the data distribution element (34), one or more control parameters based on the multimedia content; and (d) establishing one or more content channels based on the control parameters.

## Description

### FIELD OF INVENTION

The present invention relates to method and apparatus for multimedia broadcasting and multicasting within a mobile telecommunications context.

The invention has been developed primarily for use with mobile telephones and communication devices for use with third generation (UMTS) networks and will be described with reference to this application. However, it will be appreciated that the invention can be applied to other standards and protocols, including future generations.

### BACKGROUND TO INVENTION

One way in which the next generation of mobile telecommunications devices, such as mobile telephones, and their associated networks will differ from the present generation is their handling of multicasting and broadcasting. Multicasting is an arrangement whereby streaming media (audio, video, etc) is directed to a plurality of specific subscribers. By contrast, broadcasting involves providing content that can be accessed by anyone with suitable equipment. Free to air television and radio are examples of broadcasting, whilst a pay per view webcast is an example of multicasting.

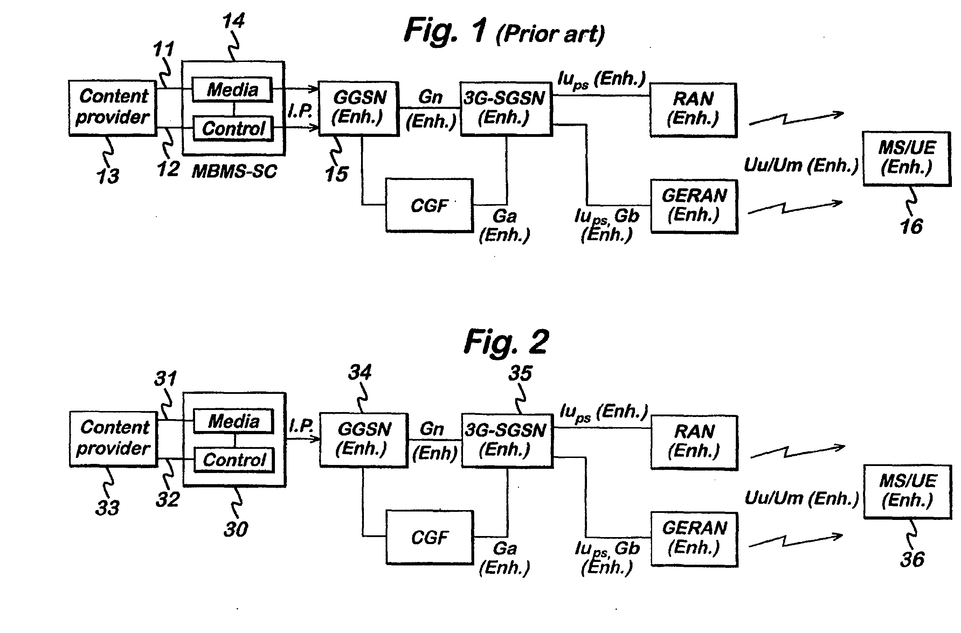

As shown in Figure 1, proposals for multicasting and broadcasting media in a 3G network 10 include sending content 11 and control signals 12 from a content provider 13 to an MBMS-SC (Multimedia Broadcast/Multicast Service - Service Center) 14. The MBMS-SC then sends the control signals 12 and content 11 to a GGSN 15 for routing to the appropriate recipient Mobile Station/User Equipment MS/UE 16. The control signals 12 can include, for example, Quality of Service (QoS) parameters and area handling information.

As presently proposed, separate channels are opened between the MBMS-SC and GGSN for the control signals 12 and content 11. It is, however, generally desirable to reduce the number of channels open for any given communication arrangement within a network.

### SUMMARY OF INVENTION

In a first aspect of the invention, there is provided a method of transmitting multimedia content from a network content element to a network data distribution element for further distribution within a mobile telecommunications network, the method including the steps of:
(a) providing the multimedia content to the network content element;
(b) sending the multimedia content from the content element and receiving it in the data distribution element;
(c) determining, in the data distribution element, one or more control parameters based on the multimedia content; and
(d) establishing one or more content channels based on the control parameters

Preferably, the multimedia content is sent in Internet Protocol (IP) packets. More preferably, step (c) includes determining, from an address of the IP packets, where to forward the IP packets for further distribution. Step (c) more preferably includes looking up a table with IP address to area mappings to determine an area handling parameter.

In a preferred embodiment, a quality of service (QoS) parameter associated with the broadcast or multicast is sent via a one off message to the data distribution element, without opening an additional channel between the content element and the data distribution element.

In one form of the invention, the network is an IP network and the QoS parameter is sent via RSVP or DiffServ.

In an alternative form of the invention, the multimedia content is multicast content and a quality of service (QoS) parameter is predetermined for each IP multicast address for which the content is ultimately intended.

Preferably, the invention further includes the step, after step (d), of forwarding the multimedia content from the data distribution element on the basis of the control parameters.

According to a second aspect of the invention, there is provided telecommunications network apparatus transmitting multimedia content, the telecommunications network apparatus including a network content element and a network data distribution element, the content element being configured to:
(a) receive the multimedia content; and
(b) send the multimedia content to the data distribution element;
   the content distribution element being configured to:
(c) determine one or more control parameters based on the multimedia content; and
(d) establish one or more content channels based on the control parameters.

Preferably, the multimedia content is sent in Internet Protocol (IP) packets. More preferably, the determination of control parameters includes determining, from an address of the IP packets, where to forward the IP packets for further distribution. The determination of control parameters preferably includes looking up a table with IP address to area mappings to determine an area handling parameter.

In one form of the invention, a quality of service (QoS) parameter associated with the broadcast or multicast is received in the data distribution element via a one off message, without opening an additional channel between the content element and the data distribution element.

Preferably, the network is an IP network and the QoS parameter is sent via RSVP or DiffServ.

In an alternative embodiment, the multimedia content is multicast content and a quality of service (QoS) parameter is predetermined for each IP multicast address for which the content is ultimately intended.

In a preferred embodiment, the data distribution element is further configured to forward the multimedia content from the data distribution element on the basis of the control parameters.

Preferably, the data distribution element is a gateway element, and more preferably is a gateway between an external IP/data network and telecom/PLMN sections of the network. It is particularly preferred that the data distribution element is a Gateway GPRS Serving Node (GGSN) in a third generation telecommunications network.

Preferably, the network content element is a Multimedia Broadcast/Multicast Service - Service Centre (MBMS-SC).

### BRIEF DESCRIPTION OF DRAWINGS

Figure 1 is a schematic view of prior art proposals for implementing multimedia broadcasting and multicasting in a third generation (3G) network; and
Figure 2 is a schematic view of a network arrangement for providing broadcast or multicast multimedia content between a content network element and a data distribution network element, in accordance with the invention

### DETAILED DESCRIPTION OF PREFERRED EMBODIMENT

Referring to Figure 2, there is shown an arrangement for providing broadcast or multicast multimedia content. A core network includes a network content element in the form of a Multimedia Broadcast/Multicast Service - Service Centre (MBMS-SC) 30. The MBMS-SC is configured to receive media data 31 and control data 32 from a content provider 33 disposed outside the core network. It will be appreciated that the content provider could alternatively be positioned within the core network.

A data distribution network element is provided in the form of a GGSN 34, which acts as a gateway between the internet or an external IP/data network and telecom/PLMN sections of the network. The GGSN is in communication with one or more SGSNs (for clarity, only one SGSN 35 is shown), and both the GGSN and the SGSN can communicate with a charging gateway function that handles collation of charging data

The SGSN is configured to selectively communicate with one or more mobile stations or user equipment (MS/UE) within its area of operation, via intermediate node B stations. Again, for the purposes of clarity, only a single MS/UE 36 is shown.
The content provider provides multimedia content to the MBMS-SC for distribution within the network. The content will typically be in a streaming format such as MPEG/H.261 visual data and associated audio data. However, the particular substantive content provided by the content provided is not relevant to the present invention. The multimedia content can be streamed on demand, or at a scheduled time. Again, the mechanism behind commencement of data streaming is not relevant to the present invention, and so is not discussed further in the present specification.

Along with the substantive multimedia content, the content provider supplies control data, which can include, for example, quality of service (QoS) information and multicast/broadcast information. This control data is used by various network elements in decided how to deal with the substantive content during distribution. In the preferred form of the invention, the only control data sent by the content provider to the MBMS-SC is QoS parameters. However, other control data could also be sent.

Upon receipt of the control data, the MBMS-SC sends the substantive data to the GGSN for onward distribution via the radio network. In a multicast situation, the substantive data needs to be sent to a plurality of ME/UEs, typically on the basis that they have subscribed to or purchased the right the multicast transmission. In a broadcast situation, the substantive data is transmitted to certain area, which can be as small as a cell (or less where sub-cell transmission areas are supported) or can cover the entire network. Anyone can then access the substantive data. The difference between broadcast and multicast is that broadcast data is not transmitted to a particular user (or users), whilst multicast is.

In the preferred form of the invention, the QoS parameters associated with the substantive data are sent via RSVP or DiffServ. This one-off message avoids the need to open a separate control channel for control data, whilst still providing the GGSN with the QoS service data it needs for further transmission of the substantive data into the radio network.

In other embodiments, when multicasting, QoS parameters can be predefined on a per multicast address basis. In this embodiment, the GGSN can access a database that defines the QoS parameter value for each multicast address. Again, this avoids the need for a separate control channel between the MBMS-SC and the GGSN. It will be appreciated that this means only a single set of QoS parameters can be used for each multicast address. However, in many cases, removing the need for a separate control channel is an acceptable trade-off.

In yet other embodiments, that can be implemented in addition or as an alternative to the QoS embodiment, there is a need for the GGSN to have area handling information. Area handling is a mechanism for determining the network elements that serve the multicast or broadcast area for a particular service. For example, upon receipt of broadcast content from the MBMS-SC, the GGSN needs to decide what set of cells the data will be broadcasted to.

In the prior art, this information would be provided via a dedicated control channel between the MBMS-SC and GGSN. However, in the present embodiment, area handling is dealt with by the GGSN by referring to the address of broadcast/multicast data packets as they are received from the MBMS-SC. First, the GGSN maps the area defined by the packet address to one or more SGSNs that cover that area, and then forwards the substantive data to those SGSNs. Upon receipt of the data in the SGSNs, a similar process is performed on the packet addresses to determine the relevant radio network controllers (RNC) or base station controllers (BSC) that serve the required BTS/Node Bs. Each BTS/Node B then broadcasts the substantive data to the required cells.

By deciding where to transmit the substantive data based on packet addresses, it is possible to avoid the need for a separate control channel for sending control information from the MBMS-SC to the GGSN.

Also, although the invention has been described with reference to a third generation (3G) network, it will be appreciated that the invention can be applied to any other network utilising a similar structure for broadcasting and multicasting of data to mobile users.

The invention has been described with reference to a specific embodiment. However, it will be appreciated by those skilled in the art that the invention can be embodied in many other forms.

## Claims

1. A method of transmitting multimedia content from a network content element to a network data distribution element for further distribution within a mobile telecommunications network, the method including the steps of:
(a) providing the multimedia content to the network content element;
(b) sending the multimedia content from the content element and receiving it in the data distribution element;
(c) determining, in the data distribution element, one or more control parameters based on the multimedia content; and
(d) establishing one or more content channels based on the control parameters

2. A method according to claim 1, wherein the multimedia content is sent in Internet Protocol (IP) packets.

3. A method according to claim 2, wherein step (c) includes determining, from an address of the IP packets, where to forward the IP packets for further distribution.

4. A method according to claim 3, wherein step (c) includes looking up a table with IP address to area mappings to determine an area handling parameter.

5. A method according to any one of the preceding claims, wherein a quality of service (QoS) parameter associated with the broadcast or multicast is sent via a one off message to the data distribution element, without opening an additional channel between the content element and the data distribution element.

6. A method according to any one of the preceding claims, wherein the network is an IP network and the QoS parameter is sent via RSVP or DiffServ.

7. A method according to any one of claims 1 to 4, wherein the multimedia content is multicast content and a quality of service (QoS) parameter is predetermined for each IP multicast address for which the content is ultimately intended.

8. A method according to anyone of the preceding claims, further including the step, after step (d), of forwarding the multimedia content from the data distribution element on the basis of the control parameters.

9. A method according to any one of the preceding claims, wherein the data distribution element is a gateway element.

10. A method according to claim 9, wherein the data distribution element is a gateway between an external IP/data network and telecom/PLMN sections of the network.

11. A method according to claim 10, wherein the data distribution element is a Gateway GPRS Serving Node (GGSN) in a third generation telecommunications network.

12. A method according to any one of the preceding claims, wherein the network content element is a Multimedia Broadcast/Multicast Service - Service Centre (MBMS-SC).

13. Telecommunications network apparatus transmitting multimedia content, the telecommunications network apparatus including a network content element and a network data distribution element, the content element being configured to:
(a) receive the multimedia content; and
(b) send the multimedia content to the data distribution element;
the content distribution element being configured to:
(c) determine one or more control parameters based on the multimedia content; and
(d) establish one or more content channels based on the control parameters.

14. Telecommunications network apparatus according to claim 13, wherein the multimedia content is sent in Internet Protocol (IP) packets.

15. Telecommunications network apparatus according to claim 14, wherein the determination of control parameters includes determining, from an address of the IP packets, where to forward the IP packets for further distribution.

16. Telecommunications network apparatus according to claim 15, wherein the determination of control parameters includes looking up a table with IP address to area mappings to determine an area handling parameter.

17. Telecommunications network apparatus according to any one of claims 13 to 16, wherein a quality of service (QoS) parameter associated with the broadcast or multicast is received in the data distribution element via a one off message, without opening an additional channel between the content element and the data distribution element.

18. Telecommunications network apparatus according to any one of claims 13 to 17, wherein the network is an IP network and the QoS parameter is sent via RSVP or DiffServ.

19. Telecommunications network apparatus according to any one of claims 13 to 16, wherein the multimedia content is multicast content and a quality of service (QoS) parameter is predetermined for each IP multicast address for which the content is ultimately intended.

20. Telecommunications network apparatus according to any one of claims 13 to 17, wherein the data distribution element is further configured to forward the multimedia content from the data distribution element on the basis of the control parameters.

21. Telecommunications network apparatus according to any one of claims 13 to 8, wherein the data distribution element is a gateway element.

22. Telecommunications network apparatus according to claim 21, wherein the data distribution element is a gateway between an external IP/data network and telecom/PLMN sections of the network.

23. Telecommunications network apparatus according to claim 22, wherein the data distribution element is a Gateway GPRS Serving Node (GGSN) in a third generation telecommunications network.

24. Telecommunications network apparatus according to any one of claims 13 to 23, wherein the network content element is a Multimedia Broadcast/Multicast Service - Service Centre (MBMS-SC).
